# EUROPÄISCHE PATENTSCHRIFT

(11) **EP 2 706 484 B1**
(45) Veröffentlichungstag und Bekanntmachung des Hinweises auf die Patenterteilung: **06.11.2019**
(21) Anmeldenummer: 13004395.3
(22) Anmeldetag: 10.09.2013
(51) Int. Cl.: B65G 47/51, B65H 1/02, B65H 3/24, B07C 5/00, B65H 29/46, G06K 13/14, G06K 13/08, B65H 29/38, B65H 29/40

(54) **Kartenmassenspeicher sowie entsprechendes Sortierverfahren von Karten**
Cards mass storage, and corresponding method of sorting cards
Stockage de masse de cartes, ainsi que procédé de tri de cartes correspondant

(30) Priorität: 10.09.2012 DE 102012017786
(43) Veröffentlichungstag der Anmeldung: 12.03.2014
(73) Patentinhaber: BÖWE SYSTEC GmbH, 86159 Augsburg (DE)
(72) Erfinder: Flach, Boris, 86863 Langenneufnach (DE); Koelle, Helmut, 86179 Augsburg (DE)
(74) Vertreter: Reuther, Martin

(56) Entgegenhaltungen:
- EP-A1- 1 880 863
- WO-A1-2004/039711
- WO-A1-2013/030337
- DE-A1- 10 036 715
- DE-A1-102004 022 744
- JP-A- S5 693 653
- JP-U- H0 286 967
- US-A- 3 016 239
- US-A- 3 930 581
- US-A- 4 172 531

## Beschreibung

Die Erfindung betrifft einen Kartenmassenspeicher sowie ein Verfahren zum Sortieren von Karten.

Die Erfindung betrifft einerseits ein Kartenmassenspeicher mit an einem umlaufenden, in sich beweglichen Kartenhalterträger angeordneten Kartenhaltern bzw. mit einem Speicher und einer Kartenübergabe zur Eingabe von Karten in den Kartenmassenspeicher und zur Ausgabe von Karten aus dem Kartenmassenspeicher, wie diese beispielsweise in der DE 100 36 715 A1 offenbart sind. Darüber hinaus ist einen Kartentransport mit einer Förderstrecke und mit wenigstens einem Speicher ebenfalls beispielsweise in der DE 10036715 A1 oder der
WO 2004/039711 A1 offenbart. Darüber hinaus betrifft die Erfindung ein Verfahren zum Sortieren von eine Förderstrecke durchlaufenden Karten unter Verwendung eines mehreren Kartenplätze aufweisenden Speichers. Das Sortieren von Karten sowie entsprechende Speicher sind auch aus der US 2002/0017481 A1 bekannt, wobei hier Spielkarten entsprechend sortiert und dann als Spielkartenstapel ausgegeben werden, so dass letztlich eine genaue Zuordnung der Karten verloren geht, was für Spielkarten bzw. Spielkartenstapel letztlich auch unerheblich ist. Auch die WO 98/35324 A1 offenbart eine Sortiervorrichtung, jedoch zum Sortieren von Geldscheinen, wobei auch hier mit der Ausgabe die genaue Zuordnung der Geldscheine verloren geht, da es letztlich für einem Kunden oder in einer Geldkassette unerheblich ist, in welcher Reihenfolge bestimmte Geldscheine, insbesondere wenn diese auch noch den gleichen Wert besitzen, ausgegeben werden. Ebenso offenbart die US 3,016,239 eine Sortiervorrichtung.

Im Zusammenhang vorliegender Beschreibung sei betont, dass als Karten insbesondere Geldkarten, Kreditkarten oder ähnliche Karten zur Anwendung kommen. Ebenso können SIM-Karten oder Chips, insbesondere Telefonchips, dementsprechend als Karten mit Kartenträgern verheiratet werden. Insofern umfasst im vorliegenden Zusammenhang der Begriff "Karten" insbesondere flächige, im Wesentlichen eigensteife Körper, die nicht größer als 10 mal 10 cm sind. Bei derartigen Karten, die in der Regel personalisierte Daten enthalten, ist es besonders wichtig, dass diese zutreffend zugeordnet werden können, damit der Schutz personenrelevanter Daten möglichst weitgehend gewährleistet werden kann.

Es ist Aufgabe vorliegender Erfindung, die Vorrichtungen und Verfahren derart auszugestalten, dass möglichst kurze Zugriffszeiten und mithin möglichst schnelle Taktzeiten realisiert werden können. Als Lösung werden erfindungsgemäss Verfahren und Vorrichtungen mit den Merkmalen der unabhängigen Ansprüche vorgeschlagen.

So kann sich ein Kartenmassenspeicher mit an einem umlaufenden, in sich beweglichen Kartenhalterträger angeordneten Kartenhaltern dadurch auszeichnen, dass wenigstens zwei Kartenhalter starr zueinander an einem ersten Haltekörper und wenigstens zwei weitere Kartenhalter starr zueinander an einem zweiten Haltekörper angeordnet sind und dass die beiden Haltekörper beweglich zueinander an dem Kartenhalterträger angeordnet sind. Auf diese Weise können die einzelnen Karten in eng zueinander angeordneten Kartenhaltern gespeichert werden, da sie mit wenigstens einem anderen Kartenhalter an einem Haltekörper angeordnet sind und dennoch ausreichend stabil ausgebildet werden können. Auf diese Weise können die Kartenhalter bei geeigneter Ausgestaltung sehr dicht aneinander angeordnet werden, wodurch die einzelnen Zugriffszeiten auf ein Minimum gesenkt werden können, da die Strecke um von einem Kartenhalter zu dem nächsten zu gelangen, auf ein Minimum begrenzt ist.

Vorzugsweise umfasst jeder Kartenhalter eine Kartenführung, welche vorzugsweise dazu dient, eine Karte bei der Einfuhr in den Kartenhalter bzw. bei der Ausfuhr aus dem Kartenhalter heraus zu führen, wobei wenigstens für einen Kartenhalter eines ersten Haltekörpers ein Teil der Kartenführung an einem zweiten benachbarten Haltekörper vorgesehen ist. Auf diese Weise können die Kartenhalter benachbarter Halterkörper sehr dicht aneinander angeordnet werden, wodurch insgesamt die Dichte der Kartenhalter im Massenspeicher und mithin auch die Zugriffszeit optimiert werden kann.

Der Kartenmassenspeicher baut besonders kompakt, wenn eine Kartenübergabe in einem Linearbereich des Kartenhalterträgers angeordnet ist, in welchem der bewegliche Kartenhalterträger geradlinig geführt ist. Insbesondere besteht dann, bei geeigneter Ausgestaltung des Kartenmassenspeichers, die Möglichkeit, eine entsprechende Kartenübergabe oder Teile derselben innerhalb des umlaufenden Kartenhalterträgers vorzusehen, sodass es sich versteht, dass eine derartige Ausgestaltung auch bei einem Kartenmassenspeicher mit an einem umlaufenden, in sich beweglichen Kartenhalterträger angeordneten Kartenhaltern unabhängig von den übrigen Merkmalen vorliegender Erfindung vorteilhaft ist.

Als Kartenübergabe kann sowohl eine Karteneingabe als auch eine Kartenausgabe bzw. eine Kartenein- und -ausgabe vorgesehen sein. Insbesondere eine von innen stoßend mit einer Karte wechselwirkende Einrichtung der Kartenübergabe kann ohne weiteres in einem derartigen Linearbereich im Inneren eines umlaufenden Kartenhalterträgers angeordnet sein.

Vorzugsweise umfasst jeder Kartenhalter Kartenklemmmittel, mit denen jeweils eine Karte in ihrer Position in dem Kartenhalter geklemmt werden kann. Dieses ermöglicht, dass die Kartenhalter auch an etwaigen Umlenkstellen verhältnismäßig schnell bewegt werden können, ohne dass die Karten aufgrund von Fliehkräften die Kartenhalter verlassen. Dieses ermöglicht dementsprechend, dass der Kartenmassenspeicher entsprechend schnell bewegt werden kann, wodurch wieder die Zugriffszeiten entsprechend optimiert sind.

Derartige Kartenklemmmittel können insbesondere alternativ bzw. kumulativ zu anderen Maßnahmen, mit denen Karten in den Kartenhaltern positioniert werden können, zur Anwendung kommen. Beispielsweise kann eine entsprechende Positionierung auch durch Leitschienen erfolgen, welche den Kartenhaltern gegenüberliegend angeordnet sind und nicht mit diesen Umlaufen und einfach durch ihre Anwesenheit ein Verlassen der Karten aus den Kartenhaltern verhindern; im Bereich von Kartenübergaben können dann derartige Leitschienen geöffnet sein oder offenbar ausgebildet werden.

Vorzugsweise sind die Kartenklemmmittel seitlich der jeweiligen Kartenplätze angeordnet und wirken auf seitliche Kanten der jeweiligen Karten. Da derartige Karten in der Regel äußerst schmal sind, können dort etwaige Reibungsspuren die Karte selbst nicht nachhaltig beschädigen. Vorzugsweise liegt vorder- und rückseitig des jeweiligen Kartenplatzes einen Kartenführung, sodass Kartenführung und Kartenklemmmittel sich gegenseitig nicht beeinträchtigen. Andererseits versteht es sich, dass - insbesondere wenn geeignete Materialpaarungen zwischen Karten und Kartenklemmmitteln vorliegen - die Kartenklemmmittel auch vorder- bzw. rückseitig an einer jeweiligen Karten angreifen können und mithin eine Klemmung über die Kartenfläche selbst erfolgt.

Je nach konkreter Umsetzung können die Kartenklemmmittel einstückig mit der Wandung des Kartenhalters ausgebildet sein, beispielsweise indem diese Wandung entsprechend federnde Bereiche aufweist, welche klemmend wirken können. Ebenso ist es jedoch denkbar, für die Klemmung metallische Federn und andere separate Klemmmittel zu verwenden, die vorzugsweise gemeinsam für einen ganzen Haltekörper wirken, sodass ein Kartenklemmmittel für mehrere Kartenplätze klemmend wirksam werden kann. Eine derartige Ausgestaltung ermöglicht insbesondere eine konstruktiv einfache Applikation der Kartenklemmmittel an dem Haltekörper und dient andererseits auch einer Stabilisierung, da sowohl die Kartenklemmmittel selbst als auch deren Verbindung zu dem Haltekörper nicht zu filigran ausgebildet werden müssen.

Darüber hinaus versteht es sich, dass die Kartenklemmmittel lediglich vorgespannt reibend mit den Karten wechselwirkend ausgebildet sein können, was konstruktiv verhältnismäßig einfach ist. Andererseits ist es auch denkbar, die Kartenklemmmittel aktiv auszugestalten, so dass sie bei der Einfuhr einer Karte in einen Kartenhalter eine klemmende bzw. schließende Bewegung ausführen und so dass etwaige Reibungen an einer Karte und hierdurch bedingte Beschädigungen auf ein Minimum begrenzt werden können.

Erfindungsgemäss zeichnet sich ein Kartenmassenspeicher mit einem Speicher und einer Kartenübergabe zur Eingabe von Karten in den Kartenmassenspeicher und zur Ausgabe von Karten aus dem Kartenmassenspeicher dadurch aus, dass der Speicher ein Hauptspeicher mit einer Zahl an Kartenplätzen ist und zwischen dem Hauptspeicher und der Kartenübergabe ein Zwischenspeicher angeordnet ist, der mindestens zwei Kartenplätze und nicht mehr Kartenplätze als der Hauptspeicher aufweist.

Über einen derartigen Zwischenspeicher können Karten vorsortiert in den Hauptspeicher übergeben bzw. bei der Ausgabe dementsprechend vorsortiert werden. Auf diese Weise können etwaige Zugriffszeiten, welche notwendig sind, um auf Karten in dem Hauptspeicher zugreifen zu können, minimiert werden. Hierbei versteht es sich, dass vorzugsweise zwischen dem Hauptspeicher und dem Zwischenspeicher eine separate und lediglich hierfür ausgebildete Kartenübergabe vorgesehen ist, sodass insbesondere eine Kartenübergabe zwischen dem Hauptspeicher und dem Zwischenspeicher unabhängig von einer Kartenübergabe in den Kartenmassenspeicher selbst erfolgen kann.

Eine derartige Ausgestaltung ermöglicht es insbesondere auch, dass zwischen dem Hauptspeicher und dem Zwischenspeicher Sortiervorgänge durchgeführt werden, ohne dass hiervon die Kartenübergabe zum Kartenmassenspeicher betroffen ist.

Auch dieses ermöglicht eine unabhängige Sortierung, durch welche letztlich Zugriffszeiten minimiert werden können.

Zwar ist es rein technisch auch machbar, dass der Zwischenspeicher mehr Kartenplätze als der Hauptspeicher aufweist. Dieses macht jedoch rein organisatorisch wenig Sinn, da es dann schwierig ist, die Zugriffszeiten für den Zwischenspeicher zu optimieren. Unter Umständen ist es jedoch denkbar, auch eine derartige Ausgestaltung durchzuführen, insbesondere solange über eine zwischen dem Zwischenspeicher und dem Hauptspeicher vorgesehen Kartenübergabe, welche unabhängig von der Kartenübergabe zum Kartenmassenspeicher selbst arbeitet, Sortiervorgänge durchgeführt werden können.

Baulich besonders einfach erscheint ein linearer Hauptspeicher, in welchem demnach ein Kartenhalter hinter dem anderen angeordnet ist. Hier ist es von Vorteil, zumindest den Hauptspeicher ringartig auszubilden, wobei dieses ggf. auf für den Zwischenspeicher gilt, um die Zugriffszeiten zu maximieren, da dann letztlich jeweils bei geeigneter übriger Ausgestaltung schnellere Zugriffszeiten realisiert werden können.

Erfindungsgemäss zeichnet sich ein Kartenmassenspeicher mit einem Speicherring als Speicher und einer Kartenübergabe zur Eingabe von Karten in den Kartenmassenspeicher und zur Ausgabe von Karten aus dem Kartenmassenspeicher dadurch aus, dass der Speicherring ein Hauptspeicherring als Hauptspeicher ist und ein Zwischenspeicherring als Zwischenspeicher zwischen dem Hauptspeicherring und der Kartenübergabe angeordnet ist. Die ringartige Ausgestaltung ermöglicht verhältnismäßig schnelle Bewegungen, welche von ihrer Geschwindigkeit her mit geradlinigen Anordnungen wesentlich schwerer bzw. baulich aufwendiger realisiert werden müssen. Dementsprechend lässt sich hierdurch die Zugriffszeit für einzelne Karten im Mittel minimieren.

Vorzugsweise weisen Hauptspeicherring bzw. Hauptspeicher und Zwischenspeicherring bzw. Zwischenspeicher getrennte Antriebe auf, sodass einzelne Kartenplätze gezielt angesteuert werden können. Hierdurch lässt sich auf verhältnismäßig baulich einfache Weise ein Sortieren ermöglichen.

Zur weiteren Minimierung von Zugriffszeiten bzw. zur entsprechenden Minimierung von Sortierzeiten ist es von Vorteil, wenn der Zwischenspeicher bzw. der Hauptspeicher und dementsprechend ggf. der Hauptspeicherring und/oder der Zwischenspeicherring jeweils eine Drehrichtungsumkehr in ihrem Antrieb vorgesehen haben. Auch auf diese Weise lassen sich die Wege zu einzelnen Kartenplätzen minimieren, was dementsprechend auch für die Zugriffszeiten und etwaige Sortierzeiten gilt. Eine solche Drehrichtungsumkehr ist somit auch für einen Speicher, der einen umlaufenden, in sich beweglichen Kartenhalterträger und an diesem angeordnete Kartenhalter umfasst, von Vorteil, sei dieser als Hauptspeicher oder sei dieser als Zwischenspeicher oder in Alleinstellung eingesetzt.

Vorzugsweise weist die Kartenübergabe zu dem Kartenmassenspeicher getrennte Übergabeplätze auf. Dieses bedingt, dass eine Eingabe bzw. Ausgabe von Karten unabhängig davon erfolgen kann, wie die Stellung der einzelnen Kartenhalter des Kartenmassenspeichers ist. So können beispielsweise Sortiervorgänge stattfinden, während gleichzeitig ein an dem Kartenmassenspeicher vorbeilaufender Kartenförderer eine Karte zu der Kartenübergabe zu fördert oder von dieser ab fördert. Lediglich während der Kartenübergabe selbst muss von dem Kartenmassenspeicher ein entsprechender Kartenplatz bereit gehalten werden. Selbiges gilt dementsprechend für den zugehörigen Kartenförderer; es muss einfach sichergestellt sein, dass während der Kartenübergabe keine Fehlfunktionen auftreten. Es versteht sich, dass in einer alternativen Ausführungsform die Kartenübergabe lediglich einen Übergabeplatz aufweisen kann, was baulich verhältnismäßig einfach ist, jedoch dazu führt, dass beispielsweise ein Kartenförderer oder eine sonstige Entnahme oder Zufuhr einer Karte nur dann entsprechend arbeiten kann, wenn der zugehörige Kartenhalter stillsteht. Insofern kann ein entsprechender Speicher dann währenddessen keine sortier- oder sonstige Verlagerungsbewegung der Kartenhalter durchführen.

Auch bei ringartig ausgebildeten Hauptspeichern bzw. Zwischenspeichern ist es von Vorteil, wenn zwischen diesen eine weitere, unabhängig von der Kartenübergabe zu dem Kartenmassenspeicher arbeitende Kartenübergabe vorgesehen ist. Dieses ermöglicht insbesondere Sortiervorgänge auch unabhängig von einer Kartenübergabe zu dem Kartenmassenspeicher selbst.

Vorzugsweise weisen der Zwischenspeicher und der Hauptspeicher jeweils Kartenplätze auf und die Zahl der Kartenplätze des Zwischenspeicherrings beträgt weniger als 10% der Zahl der Kartenplätze des Hauptspeicherrings. Der Zwischenspeicher dient dementsprechend wirklich lediglich der Zwischenspeicherung und Sortierung während die eigentliche speichernde Funktion durch den Hauptspeicher erfolgt. Hierbei ist es insbesondere auch denkbar, dass die Zahl der Kartenplätze des Zwischenspeichers weniger als 5%, vorzugsweise weniger als 3%, der Zahl der Kartenplätze des Hauptspeichers beträgt. Hierdurch kann insbesondere auch gewährleistet werden, dass der Zwischenspeicher verhältnismäßig schnell drehen kann, wodurch verhältnismäßig schnelle Zugriffszeiten des Kartenmassenspeichers selbst realisiert werden können. Dieses ist schon allein durch die geringere Masse, welche bewegt werden muss, ermöglicht.

Kurze Zugriffszeiten lassen sich insbesondere dann realisieren, wenn die Kartenplätze des Zwischenspeichers starr zueinander angeordnet sind. Zwar mag eine derartige Anordnung auf den ersten Blick der Anordnung nach der DE 102 61 472 A1 entsprechen. Diese ist jedoch zum Bearbeiten von Karten gedacht, sodass hier an sich ein Zwischenspeicher im engeren Sinne nicht vorliegt, sondern lediglich die Zeit, in welcher eine Karte an dem entsprechenden Arbeitsgerät anliegt, mit einer kleinstmöglichen Anordnung maximiert werden soll. Insofern handelt es sich bei dieser Anordnung um einen Kartenmassenspeicher nicht, da dieser naturgemäß gar keine Speicherfunktion erfüllen soll.

Insbesondere ermöglicht diese Anordnung keinerlei freie Adressierbarkeit der jeweiligen Kartenplätze und mithin keinerlei Sortierfunktion. Auch ist bei dieser Anordnung der Antrieb nicht reversibel ausgebildet.

Dementsprechend kann der vorliegende Kartenmassenspeicher einzelne Kartenplätze gezielt anfahren oder auch nicht anfahren, was gerade bei der Anordnung nach der DE 102 61 472 A1 nicht möglich ist.

Als Kartenspeicher mit starr zueinander angeordneten Kartenplätze können allerdings ohne weiteres Kartenräder, beispielsweise auch mit in Sternform angeordneten Saugnäpfen oder mit schlitzartigen Kartenhaltern, vorteilhaft zur Anwendung kommen, solange diese dafür ausgelegt sind, einzelne Kartenplätze anfahren oder auch nicht anfahren zu können. Hierzu ist dann dementsprechend auch eine selektive Kartenübergabe in den Zwischenspeicher hinein oder aus diesem heraus vorteilhaft.

Ebenso können als Zwischenspeicher Kartenboxen mit mehreren Kartenplätzen zur Anwendung kommen, die im Wesentlichen linear angeordnet sind. Eine derartige Kartenbox kann beispielsweise an einem Arm oder an einer Linearführung bewegt werden, um einzelne Kartenplätze des Zwischenspeichers jeweils mit einer Kartenübergabe in Wechselwirkungsposition zu bringen.

Vorzugsweise umfasst der Kartenmassenspeicher wenigstens einen weiteren Hauptspeicher sowie eine direkte oder indirekte Kartenübergabe sowohl zwischen dem Zwischenspeicher und jeweils den beiden Hauptspeichern und/oder zwischen den beiden Hauptspeichern untereinander. Insofern kann über den Zwischenspeicher über ggf. auch über weitere Zwischenspeicher, eine Sortierung in verschiedene Hauptspeicher hinein oder auch zwischen diesen Hauptspeichern erfolgen, um dann möglichst effektiv mit hoher Übergabegeschwindigkeit eine Kartenausgabe vorzunehmen. Insbesondere lässt sich naturgemäß hierdurch auch die Zahl der Kartenplätze des Kartenmassenspeichers dementsprechend vorteilhaft erhöhen.

Vorzugsweise erfolgt auch diese direkte oder indirekte Kartenübergabe mit getrennten Übergabeplätzen, sodass die jeweiligen Baugruppen, welche Karten übergeben, unabhängig voneinander bewegt werden können. Lediglich bei der Kartenübergabe haben dann die jeweiligen Kartenplätze dieser Baugruppe in geeigneter Übergabeposition zu sein.

Hierbei kann insbesondere je Hauptspeicher ein Zwischenspeicher vorgesehen sein, da hierdurch die Flexibilität der Gesamtanordnung wesentlich erhöht ist. Insbesondere ist es denkbar, dass jeder der Zwischenspeicher wiederum separat eine Kartenübergabe zu einem Kartenförderer aufweist, wodurch sehr flexibel aber auch mit doppelter Geschwindigkeit Karten bereit gestellt werden können.

Insbesondere durch eine direkte oder indirekte Kartenübergabe zwischen den Zwischenspeichern kann eine Sortiermöglichkeit maximiert werden.

Die Gesamtanordnung baut besonders kompakt und mithin mit schnellen Zugriffszeiten, wenn der Kartenmassenspeicher einen Speicher mit mehreren adressierbaren Kartenhaltern als Zwischenspeicher, wobei die Kartenhalter des Zwischenspeichers starr zueinander und in Kreisform um eine Drehachse rotierbar angeordnet sind, und einen Hauptspeicher mit an einem umlaufenden in sich beweglichen Kartenhalterträger angeordneten Kartenhaltern umfasst. In letzterem können sehr viele Karten gut zugänglich gespeichert werden, während über den Zwischenspeicher schnell Karten sortiert und ggf. für eine Kartenübergabe bereit gestellt werden können.

Hierbei versteht es sich, dass es von Vorteil ist, wenn die Drehrichtung des Zwischenspeichers und/oder des Hauptspeichers geändert werden kann, um Zugriffszeiten minimieren zu können.

Vorzugsweise sind die Kartenhalter des Kartenmassenspeichers jeweils adressierbar, sodass Karten gezielt in den Kartenmassenspeicher abgelegt und aus diesem wieder entfernt werden können.

Insoweit mehr als ein Speicher in dem Kartenmassenspeicher vorhanden ist, ist es von Vorteil, wenn diese individuell adressierbar sind, sodass jeder Kartenhalter eine einzelne individuelle Adresse hat und jede Karte gezielt in dem Speicher abgelegt, umsortiert und aus diesem wieder entnommen werden kann.

Ein Kartentransport mit einer Förderstrecke und mit wenigstens einem Speicher, wie einem vorstehend beschriebenen Kartenmassenspeicher, Hauptspeicher oder Zwischenspeicher, kann sich dadurch auszeichnen, dass zwischen dem Speicher und der Förderstrecke eine Kartenübergabe vorgesehen ist, die einen speicherseitigen Übergabeplatz und einen hiervon abweichenden förderstreckenseitigen Übergabeplatz umfasst. Auf diese Weise kann der Speicher unabhängig von der Förderstrecke agieren und Kartenplätze für eine Übergabe bereit stellen. Selbiges gilt für die Förderstrecke. Hierdurch kann insbesondere für etwaige Sortiervorgänge Zeit gewonnen werden.

Derartige Förderstrecken arbeiten häufig mit einer bestimmten Taktung, sodass durch ein Abweichen der Übergabeplätze während der Taktung, also während einer Bewegung von Karten bzw. Kartenplätzen entlang der Förderstrecke Sortiertätigkeiten und ähnliches durchgeführt werden können. Sowie während eines Taktes eine Karte auf einem förderstrecken seitigen Übergabeplatz befindlich ist, kann dann entsprechend eine Kartenübergabe erfolgen, wobei während einer entsprechenden Bewegung dann wiederum Sortiervorgänge durchgeführt werden können.

Insbesondere ein derartiger Kartentransport im Zusammenspiel mit einem Kartenspeicher mit mehreren adressierbaren, starr zu einander und in Kreisform um eine Drehachse rotierbar angeordneten Kartenhaltern als Speicher und/oder mit einem Kartenmassenspeicher, bei welchem die an dem umlaufenden in sich beweglichen Kartenhalterträger angeordneten Kartenhalter den Speicher bilden, kann bei einer sehr großen Zahl an Kartenplätzen dennoch mit äußerst hohen Zugriffszeiten und mithin mit einer großen Taktung arbeiten.

Dementsprechend ist auch ein Kartenspeicher mit mehreren adressierbaren Kartenhaltern, welcher sich dadurch auszeichnet, dass die Kartenhalter starr zueinander und in Kreisform um eine Drehachse rotierbar angeordnet sind, vorteilhaft.

Vorzugsweise ist auch bei einer derartigen Ausgestaltung die Drehrichtung umzukehren, sodass Zugriffszeiten bzw. Taktzeiten maximiert werden können.

Die Gesamtanordnung baut besonders kompakt, wenn die starr zu einander und in kreisform um eine Drehachse rotierbar angeordneten Kartenhalter Ausnehmungen in einem zylinderförmigen Grundkörper umfassen. Hierdurch kann baulich sehr einfach und stabil ein entsprechender Kartenspeicher bereitgestellt werden, der dementsprechend aufgrund seiner kompakten Bauweise auch hohe Zugriffsgeschwindigkeiten ermöglicht. Bei einer derartigen Ausgestaltung kann, unabhängig davon, ob die Kartenhalter in einem Grundkörper vorgesehene Ausnehmungen umfassen, die äußere Kreisbahn aller Kartenplätze in ihrem Radius die dreifache radiale Tiefe eines Kartenplatzes nicht überschreiten. Letzteres bedingt eine baulich sehr kompakte Anordnung des entsprechenden Kartenspeichers, was dementsprechend die Zugriffszeiten maximiert.

Vorzugweise ist wenigstens ein Kartenhalter passivisch ausgebildet, das heißt, dass der entsprechende Kartenhalter in keiner Weise auf die jeweiligen Karten einwirkt - es sei denn, diese Karten zu speichern. Insbesondere baut hierdurch der Speicher selbst sehr einfach, da auf komplexe Zuleitungen, Kabel oder elektrische Anschlüsse für diesen Kartenplatz verzichtet werden kann, die letztlich lediglich die Masse erhöhen und mithin Zugriffszeiten verringern würden. Insbesondere ist es dementsprechend von Vorteil, wenn möglichst alle Kartenhalter passivisch ausgebildet sind.

An dieser Stelle sei betont, dass der Begriff "Kartenplatz" in vorliegendem Zusammenhang den Raum in einem Speicher in einem Kartenhalter aber auch in einem Kartentransport oder in einer Kartenübergabe bezeichnet, der für eine Karte vorgesehen ist. Es ist mithin der Raum, der auch von geeigneten Führungen und Halte- oder Klemmmitteln begrenzt sein muss, um eine Karte sicher an ihrem Kartenplatz zu halten. Ebenso ist es der Raum, der bei einer Bewegung eines Kartenhalters frei sein muss, damit die Karte ungehindert bewegt und auch in den Kartenhalter befördert oder aus diesem heraus gefördert werden kann.

Ein Verfahren zum Sortieren von eine Förderstrecke durchlaufenden Karten unter Verwendung eines mehreren Kartenplätzen aufweisenden Speichers kann sich dadurch auszeichnen, dass Karten unter gezielten Belassen von Speicherleerplätzen, die dann, falls erforderlich, nachfolgend aufgefüllt werden, in den Speicher überführt und anschließend wieder aus dem Speicher in die Förderstrecke überführt werden. Dieses ist insbesondere für Speicher, die sukzessive mit Kartenplätzen versehen sind bzw. bei denen Kartenplätze sukzessive an einer Kartenübergabe vorbeigeführt werden, von Vorteil, da hierdurch einfach und zielgerichtet Sortiervorgänge durchgeführt werden können. Für ein derartiges gezieltes Belassen wird ein Leerplatz an einer Kartenübergabe vorbeigeführt bzw. überspringt eine Kartenübergabe oder ein Kartenzwischenspeicher einen Leerplatz, um ihn dann anschließend, falls erforderlich, zu befüllen. Da eine derartige Verfahrensführung auch unabhängig von einer Förderstrecke vorteilhaft ist, wenn beispielsweise Karten in einer vorgegebenen Taktung in den Speicher überführt und aus diesem ausgeführt werden sollen, kann sich ein Verfahren zum Sortieren von Karten unter Verwendung eines mehreren Kartenplätzen aufweisenden Speichers dadurch auszeichnen, dass Karten unter gezielten Belassen von Speicherleerplätzen, die dann, falls erforderlich, nachfolgend aufgefüllt werden, in den Speicher überführt und anschließend, vorzugsweise gezielt und einzeln, wieder aus dem Speicher ausgeführt werden. Auf diese Weise lässt sich die Gefahr, dass zwischen dem Speicher und einer zu ihm gehörigen Kartenein- und/oder -ausgabe sehr große Wegstrecken zum Sortieren durchlaufen werden müssen, minimieren, so dass es wahrscheinlicher ist, dass der Speicher innerhalb der vorgegebenen Taktung bzw. innerhalb einer vorgegebenen Zeit auch ausreichende Sortiervorgänge durchführt, minimieren lässt.

Hierbei gewährleistet ein gezieltes und einzelnes Überführen der Karten aus dem Speicher in die Förderstrecke bzw. ein gezieltes und einzelnes Ausführen der Karten aus dem Speicher heraus, dass auch nach dem Überführen bzw. Ausführen genau bekannt ist, welche Karte gerade ausgeführt wurde, anders als dieses beispielsweise aus der US 2002/0017481 A1 für Spielkarten oder aus der WO 98/35324 A1 für Geldscheine bekannt ist, bei welchen diese Information unmittelbar nach der Ausgabe verloren geht, da dort jeweils Stapel ausgegeben werden. Insofern kann dann selbst bei einer Einsortierung in eine Magazin oder aber insbesondere bei einem weiteren Handling der Karten, wie beispielsweise bei einem Verheiraten der Karten mit einem Kartenträger, sichergestellt werden, dass auch genau die gewünschten Karten diesem Handling unterzogen werden.

Auch kann sich ein Verfahren zum Sortieren von eine Förderstrecke durchlaufenden Karten unter Verwendung eines mehreren Kartenplätze aufweisenden Speichers dadurch auszeichnen, dass Karten über die Förderstrecke an dem Speicher vorbeigefördert werden, falls diese bereits zutreffend sortiert sind. Dieses bedingt, dass zutreffend sortierte Karten ohne Zeitverzögerung weitergeförderten und anschließenden Aggregaten zur Verfügung gestellt werden können.

Insbesondere wenn die Förderstrecke am Speicher vorbeigeht und nicht durch ihn hindurch, kann sich ein Verfahren zum Sortieren von eine Förderstrecke durchlaufenden Karten unter Verwendung eines mehrere Kartenplätze aufweisenden Speichers dadurch auszeichnen, dass über die Förderstrecke Förderleerplätze zu dem Speicher geführt und ggf. Karten aus dem Speicher in die Förderplätze überführt werden. Dieses bedingt, dass ohne weitere Verzögerung, sukzessive Karten von dem Förderer weitergefördert werden können. Hierbei ist insbesondere es nicht erforderlich, Zeit für eine separate Entnahme von Karten aus Förderplätzen einzuplanen.

Entsprechende Sortiermöglichkeiten belassen insbesondere die in der DE 10 2004 053 027 B4 angedeuteten Sortierverfahren und -vorrichtungen nicht, bei welchen ein oder mehrere Eingänge und Ein- oder Ausgänge, die jeweils durch filo-Speicher bestückt sind, offenbart sind. Hier sind anschließend noch manuelle Tätigkeiten, wie beispielsweise das Überführen eines entsprechenden Magazins zu einer nachfolgenden Anlage oder auch das Einsetzen eines Magazins mit Karten, die entsprechend verteilt werden sollen, dargestellt. Insofern handelt es sich dort an sich lediglich um einen Verteiler und nicht um einen Sortierer.

Auch kann sich ein Verfahren zum Sortieren von eine Förderstrecke durchlaufenden Karten unter Verwendung eines mehreren Kartenplätze aufweisenden Speichers und eines Kartenmassenspeichers mit einem Hauptspeicher und einem Zwischenspeicher, bei welchem zunächst Karten umsortiert oder nach Karteninformationen, wie beispielweise einer Kartenfarbe oder einer Ausstattung der Karte, vorsortiert von der Förderstrecke in den Speicher, insbesondere in den Hauptspeicher, überführt und anschließend entsprechend in einem Datenspeicher vorgehaltener Versandinformationen sortiert aus dem Speicher in die Förderstrecke überführt werden, dadurch auszeichnend, dass der Speicher der Hauptspeicher ist und die Sortierung bei der Überführung von Karten aus dem Speicher in die Förderstrecke unter Zuhilfenahme des Zwischenspeichers erfolgt. Diese Verfahrensführung ermöglicht es, Karten ohne passende Kartenjobs zunächst in den Speicher zuladen, um anschließend die Jobs entsprechend der gespeicherten Karten diesen zuzuordnen und die Karten dann entsprechend sortiert auszugeben. Hierdurch erleichtert sich die Verfahrensführung gegenüber dem in der DE 10 2004 053 027 B4 offenbarten Verfahren erheblich, bei denen bereits eine entsprechende Zuordnung erfolgt sein muss.

Vorzugsweise erfolgt jeweils die Überführung in den Hauptspeicher, damit entsprechend große Kartenmengen vorgehalten werden können.

Darüber hinaus kann sich ein Verfahren zum Sortieren von eine Förderstrecke durchlaufenden Karten unter Verwendung eines Kartenspeichers, mit einem Hauptspeicher und einem Zwischenspeicher dadurch auszeichnen, dass die Karten zunächst von der Förderstrecke über den Zwischenspeicher in den Hauptspeicher überführt und anschließend aus dem Hauptspeicher über den Zwischenspeicher wieder in die Förderstrecke überführt werden. Auch hier ist es von Vorteil, wenn Haupt- und Zwischenspeicher die oben genannten Merkmale aufweisen, damit eine entsprechend schnelle Überführung mithin entsprechend noch weiter verminderte Taktzeiten möglich werden.

Je nach konkreter Situation kann es hierbei von Vorteil sein, wenn die Karten aus dem Hauptspeicher über den Zwischenspeicher wieder in den Hauptspeicher umsortiert werden. Auf diese Weise können bei einer nachfolgenden Kartenübergabe an die Förderstrecke Zeiten gespart werden, sodass auch hier optimale Taktzeiten gewährleistet werden können.

Darüber hinaus können die Karten in den Hauptspeicher vorsortiert überführt werden, wenn sie von der Förderstrecke über den Zwischenspeicher in den Hauptspeicher überführt werden, sodass ein etwaiges Umsortieren auf ein Minimum begrenzt werden kann.

Ebenso ist es möglich die Karten aus dem Hauptspeicher sortiert in den Zwischenspeicher zu überführen, bevor sie in die Förderstrecke überführt werden, wodurch insbesondere die Taktzeiten, mit denen die Überführung zwischen Zwischenspeicher und Förderstrecke erfolgt, auf ein Minimum reduziert werden können.

Hierbei können hintereinander in der Förderstrecke einzusortierende Karten in verschiedenen Haupt- und/oder Zwischenspeichern, falls mehrere Haupt- oder Zwischenspeicher vorhanden sind, einsortiert werden, sodass diese dann mehr oder weniger parallel aus dem Haupt- und/oder Zwischenspeicher in die Förderstrecke ausgegeben werden können. Alternativ bzw. kumulativ hierzu können derartige Karten bereits dicht nebeneinander in einen Hauptspeicher überführt werden, sodass sie dann entsprechend ohne aufwändige Bewegung des entsprechenden Hauptspeichers auch wieder ausgeführt werden können. In vorliegendem Zusammenhang bedeutet der Begriff "dicht", dass die entsprechenden Kartenplätze innerhalb einer Taktzeit der Förderstrecke erreichbar sind, sodass dementsprechend unverzüglich die nachfolgende Karte bereit gestellt werden kann.

Ein derartiges dichtes Nebeneinander-Einführen von Karten in einen Hauptspeicher macht insbesondere dann Sinn, wenn ein Massenspeicher fast voll ist und mithin nur begrenzt Sortiermöglichkeiten bestehen.

Die vorliegenden Verfahrensführungen ermöglichen es insbesondere, Karten völlig unsortiert in einen Zwischenspeicher zu überführen und dann sortiert auszugeben, ggf. nachdem über eine geeignete Datenverarbeitung Versandinformationen diesen Karten zugeordnet wurden. Ggf. kann anhand bestimmter Kartenmerkmale, beispielsweise einer Kartenfarbe, einer Bedruckung oder etwaiger Chipinformationen, die von einer Karte durch eine Bilderfassung oder sonstiger Sensorik ausgelesen werden können, eine Vorsortierung durchgeführt werden, ohne dass bereits eine Zuordnung dieser Karten zu etwaigen Versandinformation erfolgt. Dieses kann dann zu einem späteren Zeitpunkt geschehen.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine schematische Seitenansicht eines Kartenmassenspeichers im Zusammenspiel mit einer Förderstrecke;
- Figur 2: einen schematischen Schnitt durch die Anordnung nach Figur 1 entlang der Linie II in Figur 1;
- Figur 3: eine perspektivische Darstellung eines Haltekörpers des Kartenmassenspeichers nach Figuren 1 und 2 mit sieben Kartenhaltern;
- Figur 4: den Haltekörper nach Figur 3 in einer anderen Perspektive;
- Figur 5: einen Schnitt durch den Haltekörper nach Figuren 3 und 4;
- Figur 6: eine schematische Frontansicht eines Kartenförderers mit drei Kartenmassenspeichern nach Figuren 1 bis 5; und
- Figur 7: eine Anordnung zweier Kartenspeicher neben einer Förderstrecke.

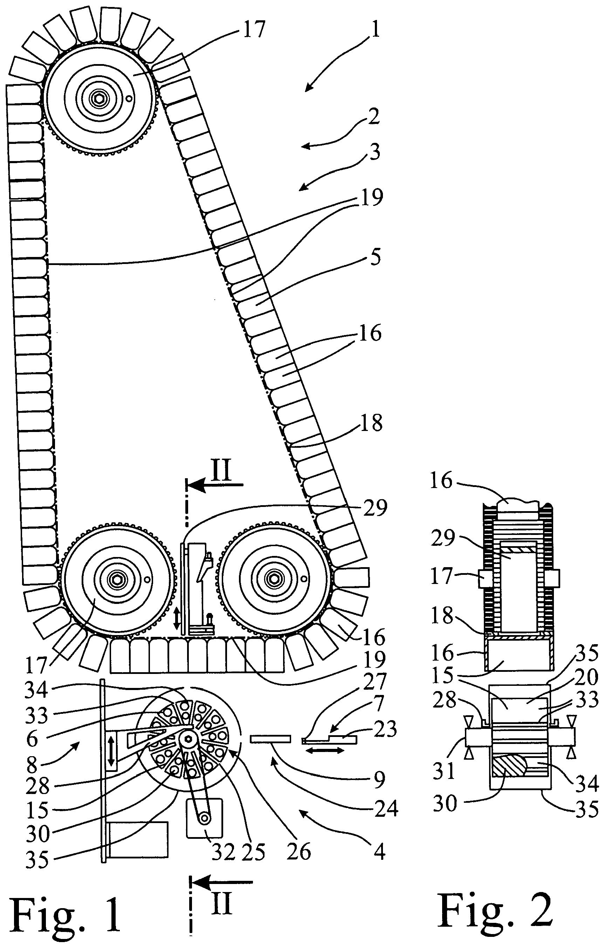

Der in Figuren 1 und 2 dargestellte Kartenmassenspeicher 1 umfasst zwei Speicher 2, einen Hauptspeicher 3 und einen Zwischenspeicher 4. Hierbei sind sowohl der Hauptspeicher 3 als Hauptspeicherring 5 als auch der Zwischenspeicher 4 als Zwischenspeicherring 6 jeweils ringförmig ausgebildet und über Kartenübergaben 7, 8 untereinander bzw. mit einer Förderstrecke 9 gekoppelt, sodass Karten von der Förderstrecke 9 über die Kartenübergabe 7 in den Zwischenspeicher 4 eingegeben bzw. aus diesem ausgegeben und Karten von dem Zwischenspeicher 4 über die Kartenübergabe 8 in den Hauptspeicher eingegeben bzw. ausgegeben werden können.

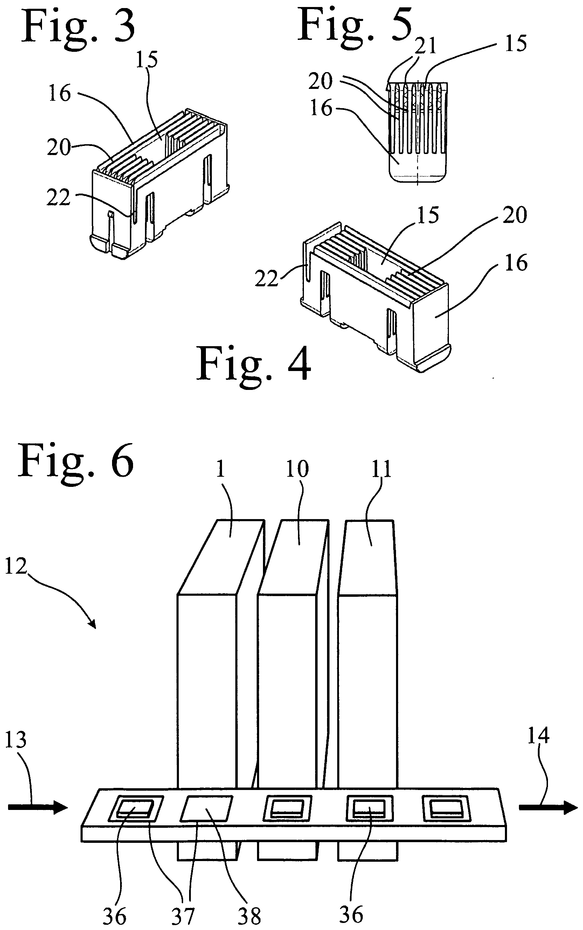

Wie in Figur 6 schematisch dargestellt, ist der Kartenmassenspeicher 1 gemeinsam mit zwei weiteren ähnlich, aber in abweichenden Ausführungsbeispielen auch abweichend, ausgestalteten Kartenmassenspeichern 10, 11 an der Förderstrecke 9 angeordnet und bildet mit diesen gemeinsam einen Kartentransport 12 mit genau einem Eingang 13 und einem Ausgang 14.

Sowohl der Hauptspeicher 3 als auch der Zwischenspeicher 4 weisen eine Vielzahl an Kartenhaltern 15 auf, sind jedoch an sich sehr unterschiedlich aufgebaut.

So weist der Hauptspeicher 3 Haltekörper 16 auf, die an einem in sich beweglichen, um drei Zahnräder 17 umlaufenden Kartenhalterträger 18 in Form einer Kunststoffkette angeordnet sind. Hierbei sind die Haltekörper 16 derart ausgebildet, dass sie in Linearbereichen 19, in welchem der Kartenhalterträger 18 geradlinig verläuft, eng aneinander liegen und letztlich äquidistante Kartenplätze 20 bereitstellen. Dieses ermöglicht eine besonders dichte bzw. enge Packung der Karten einfache Steuerung.

Wie insbesondere anhand Figur 6 ersichtlich, weist jeder Kartenhalter 15 eine Kartenführung 21 auf, welche jeweils sicherstellt, dass eine Karte sicher in einem bestimmten Kartenplatz 20 hinein und ggf. auch aus diesem heraus geführt werden kann. Hierbei ist ersichtlich, dass an einer Seite des Haltekörpers 16 für den äußersten Kartenplatz 20 eine Kartenführung nicht vorgesehen ist, wobei diese Kartenführung 21 durch eine Kartenführung 21 eines benachbarten Haltekörpers 16 bereit gestellt wird, wenn die beiden Haltekörper 16 in einem Linearbereich 19 befindlich und nebeneinander gleich ausgerichtet sind, sodass auch in Bezug auf diese Kartenplätze 20 eine Führung sichergestellt ist und die Wandstärke der einzelnen Baugruppen entsprechend der vorliegenden Erfordernissen optimal gewählt werden kann.

Nicht dargestellt sind separate Klemmmittel, welche bei diesem Ausführungsbeispiel als Federn seitlich der jeweiligen Kartenplätze in Halteschlitzen 22 eingeschoben sind und federnd auf die in den Kartenplätzen 20 befindliche Karten wirken und diese in dem Kartenhalter 15 klemmen. Hierbei wird für die sieben Kartenhalter 15 eines Haltekörpers 16 ein gemeinsames metallisches Federelement eingesetzt, wobei hier ggf. auch andere Klemmmittel, wie beispielsweise Federelemente aus anderen Materialien oder aber federnde Bereiche des Haltekörpers 16 selbst zur Anwendung kommen können.

Die Kartenübergabe 7 weist einen Schieber 23 auf, welcher eine Karte von einem Übergabeplatz 24 der Förderstrecke 9 in einen Speicherleerplatz 25 des Zwischenspeichers 4 schieben, wenn dieser an einem Übergabeplatz 26 des Zwischenspeichers 4 bzw. des Zwischenspeicherrings 6 befindlich ist, und mittels eines Rückholers 27 aus dem Zwischenspeicher 4 von dem Übergabeplatz 26 zu dem Übergabeplatz 24 überführen kann. Durch diese Ausgestaltung können sowohl die Karten auf der Förderstrecke 9 als auch der Zwischenspeicher 4 unabhängig voneinander positioniert werden, solange keine Übergabe stattfindet. Wird beispielsweise in einer alternativen Ausführungsform die Förderstrecke 9 derart gelegt, dass sie den Zwischenspeicher 4 schneidet, so bildet sich ein gemeinsamer Übergabeplatz, der es zwar einerseits ermöglicht, auf den Schieber 23 mit seinem Rückholer 27 zu verzichten, der es jedoch bedingt, dass immer lediglich entweder Karten auf der Förderstrecke 9 oder der Zwischenspeicher 4 bewegt werden können.

Wie unmittelbar ersichtlich, weist auch die Kartenübergabe 8 getrennte Übergabeplätze (nicht einzeln beziffert) auf, die es ermöglichen, dass sowohl der Hauptspeicher 3 als auch der Zwischenspeicher 4 getrennt voneinander bewegt werden können. Sind entsprechende Kartenhalter 15 an den Übergabeplätzen positioniert, so kann mittels eines Hebers 28 eine Karte aus dem Zwischenspeicher 4 in den Hauptspeicher 3 angehoben werden. Ebenso ist es möglich, mittels eines Schiebers 29 eine Karte aus einem Kartenhalter 15 des Hauptspeichers 3 nach unten zu schieben, wobei - um eine saubere Führung der Karte jederzeit zu gewährleisten - der Heber 28 in einer oberen Position befindlich ist, wenn ein Schieber 29 beginnt, eine Karte aus einem Kartenhalter 15 des Hauptspeichers 3 nach unten zu schieben. Heber 28 und Schieber 29 senken die Karte dann im Wesentlichen gemeinsam haltend in den Zwischenspeicher 4 hinab.

Der Zwischenspeicherring 6 des Zwischenspeichers 4 umfasst ein Speicherrad 30, welches um eine Drehachse 31 rotierbar mittels eines Antriebs 32 in beide Drehrichtungen zielgerichtet gedreht werden kann. Es versteht sich, dass auch der Hauptspeicherring 5 des Hauptspeichers in zwei Drehrichtungen rotieren kann, um auf diese Weise möglichst kurze Wegstrecken zu den einzelnen Kartenplätzen 20 zu realisieren.

Im Einzelnen weist das Speicherrad 30 Ausnehmungen 33 in einem zylinderförmigen Grundkörper 34 auf, welche jeweils die Kartenhalter 15 des Zwischenspeichers 4 bilden. Hierbei sind die Karten an sich relativ lose bzw. bloß durch die Schwerkraft in dem zylinderförmigen Grundkörper 34 gehalten und lediglich durch ein Führungsblech 35, welches das Speicherrad 30 kreisförmig umgibt und als Führungsschiene ein Herausfallen der Karten verhindert, gesichert. Das Führungsblech 35 weist im Bereich der Kartenübergaben 7, 8 jeweils Schlitze auf, sodass hier Karten den Zwischenspeicher 4 verlassen bzw. ein- und ausgeführt werden können.

Wenn Karten 36 auf Förderplätzen 37 der Förderstrecke 9 transportiert werden, können gezielt Förderleerplätze 38 belassen werden, die es dann ermöglichen, dort Karten 36 aus einem der Kartenmassenspeicher 1, 10, 11 abzulegen und weiter zu fördern, wie in Figur 6 schematisch angedeutet. Auf diese Weise kann eine Sortierung verhältnismäßig schnell erfolgen, da es im Ergebnis lediglich auf die die Förderstrecke 9 am Ausgang 14 verlassenden Karten 36 und ihre Reihenfolge ankommt.

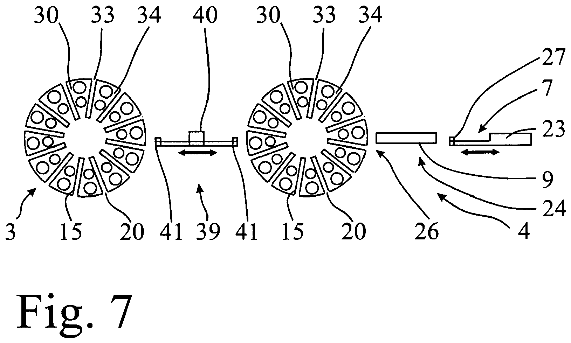

Zwischen den Kartenmassenspeichern 1, 10, 11 können auch untereinander Kartenübergaben 39, beispielsweise mit Schieber 40 und Rückholer 41, wie in Figur 7 schematisch angedeutet, vorgesehen sein, um weitere Sortiermöglichkeiten zu schaffen. Ebenso kann das lediglich über die Kartenübergabe 39 zugängliche Speicherrad 30 ausschließlich über die Kartenübergabe 39 mit Karten bestückt bzw. von Karten befreit werden. Dieses ergibt dann eine Anordnung, bei welcher zwei Speicher, ein Zwischenspeicher 4 und ein Hauptspeicher 3 mit identischen Speichern und insbesondere auch mit Speichern die eine identische Zahl an Kartenplätzen 20 aufweisen, zusammenwirken.

**Bezugszeichenliste:**

| | | | |
|---|---|---|---|
| 1 | Kartenmassenspeicher | 22 | Halteschlitz für Federelement |
| 2 | Speicher | 23 | Schieber |
| 3 | Hauptspeicher | 24 | Übergabeplatz |
| 4 | Zwischenspeicher | 25 | Speicherleerplatz |
| 5 | Hauptspeicherring | 26 | Übergabeplatz |
| 6 | Zwischenspeicherring | 27 | Rückholer |
| 7 | Kartenübergabe | 28 | Heber |
| 8 | Kartenübergabe | 29 | Schieber |
| 9 | Förderstrecke | 30 | Speicherrad |
| 10 | Kartenmassenspeicher | 31 | Drehachse |
| 11 | Kartenmassenspeicher | 32 | Antrieb |
| 12 | Kartentransport | 33 | Ausnehmung |
| 13 | Eingang des Kartentransports | 34 | Zylinderförmiger Grundkörper |
| 14 | Ausgang des Kartentransports | 35 | Führungsblech |
| 15 | Kartenhalter (exemplarisch beziffert) | 36 | Karte (exemplarisch beziffert) |
| 16 | Haltekörper (exemplarisch beziffert) | 37 | Förderplatz |
| 17 | Zahnrad | 38 | Förderleerplatz |
| 18 | Kartenhalterträger | 39 | Kartenübergabe |
| 19 | Linearbereich | 40 | Schieber |
| 20 | Kartenplatz (exemplarisch beziffert) | 41 | Rückholer |
| 21 | Kartenführung (exemplarisch beziffert) | | |

## Patentansprüche

1. Kartenmassenspeicher (1, 10, 11) mit einem Speicher (2) und einer Kartenübergabe (7, 8) zur Eingabe von Karten (36) in den Kartenmassenspeicher (1) und zur Ausgabe von Karten (36) aus dem Kartenmassenspeicher (1), **dadurch gekennzeichnet, dass** der Speicher (2) ein Hauptspeicher (3) mit einer Zahl an Kartenplätzen (20) ist und zwischen dem Hauptspeicher (3) und der Kartenübergabe (7) ein Zwischenspeicher (4) angeordnet ist, der mindestens zwei Kartenplätze (20) und nicht mehr Kartenplätze (20) als der Hauptspeicher (3) aufweist, wobei der Hauptspeicher (3) ein Hauptspeicherring (5) ist und/oder einen Antrieb mit einer Drehrichtungsumkehr aufweist.

2. Kartenmassenspeicher (1, 10, 11) nach Anspruch 1, **dadurch gekennzeichnet, dass** der Zwischenspeicher (4) ein Zwischenspeicherring (6) ist.

3. Kartenmassenspeicher (1, 10, 11) mit einem Speicherring (5, 6) als Speicher (2) und einer Kartenübergabe (7, 8) zur Eingabe von Karten (36) in den Kartenmassenspeicher (1, 10, 11) und zur Ausgabe von Karten (36) aus dem Kartenmassenspeicher (1, 10, 11), **dadurch gekennzeichnet, dass** der Speicherring (5, 6) ein Hauptspeicherring (5) als Hauptspeicher (3) ist und ein Zwischenspeicherring (6) als Zwischenspeicher (4) zwischen dem Hauptspeicherring (5) und der Kartenübergabe (7) angeordnet ist.

4. Kartenmassenspeicher (1, 10, 11) nach einem der Ansprüche 1 bis 3, **gekennzeichnet durch** wenigstens einen weiteren Hauptspeicher (3) sowie eine direkte oder indirekte Kartenübergabe(7, 8), vorzugsweise mit getrennten Übergabeplätzen, sowohl zwischen dem Zwischenspeicher (4) und jeweils den beiden Hauptspeichern (3) und/oder zwischen den beiden Hauptspeichern (3) untereinander, wobei insbesondere je Hauptspeicher (3) ein Zwischenspeicher (4) vorgesehen sein kann und vorzugsweise eine direkte oder indirekte Kartenübergabe (7, 8), vorzugsweise mit getrennten Übergabeplätzen, zwischen den Zwischenspeichern.

5. Kartenmassenspeicher (1, 10, 11) nach einem der Ansprüche 1 bis 4 mit an einem umlaufenden, in sich beweglichen Kartenhalterträger (18) angeordneten Kartenhaltern (15), wobei wenigstens zwei Kartenhalter (15) starr zueinander an einem ersten Haltekörper (16) und wenigstens zwei weitere Kartenhalter (15) starr zueinander an einem zweiten Haltekörper (16) angeordnet sind und wobei die beiden Haltekörper (16) beweglich zueinander an dem Kartenhalterträger (18) angeordnet sind, und mit einem Kartenspeicher mit mehreren adressierbaren Kartenhaltern (15) als Zwischenspeicher (4), wobei die Kartenhalter (15) des Zwischenspeichers (4) starr zueinander und in Kreisform um eine Drehachse (31) rotierbar angeordnet sind und wobei die an dem umlaufenden, in sich beweglichen Kartenhalterträger (18) angeordneten Kartenhalter (15) den Hauptspeicher (3) bilden.

6. Kartenmassenspeicher (1, 10, 11) nach Anspruch 5, **dadurch gekennzeichnet, dass** jeder Kartenhalter (15) eine Kartenführung (21) umfasst und wenigstens für einen Kartenhalter (15) eines ersten Haltekörpers (16) ein Teil der Kartenführung (21) an einem zweiten benachbarten Haltekörper vorgesehen ist.

7. Kartenmassenspeicher (1, 10, 11) nach Anspruch 5 oder 6, **dadurch gekennzeichnet, dass** eine Kartenübergabe (7) in einem Linearbereich (19) des Kartenhalterträgers (18) angeordnet ist, in welchem der bewegliche Kartenhalterträger (18) geradlinig geführt ist.

8. Kartenmassenspeicher (1, 10, 11) nach einem der Ansprüche 1 bis 7 mit einer Förderstrecke (9), **dadurch gekennzeichnet, dass** zwischen dem wenigstens einen Kartenmassenspeicher (2) und der Förderstrecke (9) eine Kartenübergabe (7) vorgesehen ist, die einen speicherseitigen Übergabeplatz (26) und einen hiervon abweichenden förderstreckenseitigen Übergabeplatz (24) umfasst.

9. Kartenmassenspeicher (1, 10, 11) nach Anspruch 5, **dadurch gekennzeichnet, dass** die Kartenhalter (15) des Zwischenspeichers (4) Ausnehmungen (33) in einem zylinderförmigen Grundkörper (34) umfassen.

10. Kartenmassenspeicher (1, 10, 11) nach einem der Ansprüche 5 und 9, **dadurch gekennzeichnet, dass** wenigstens einer der Kartenhalter (15) passivisch ausgebildet ist.

11. Verfahren zum Sortieren von eine Förderstrecke (9) durchlaufenden Karten (36) unter Verwendung eines mehrere Kartenplätze (20) aufweisenden Speichers (2) und unter Verwendung eines Kartenmassenspeichers (1, 10, 11) nach einem der Ansprüche 1 bis 5, wobei zunächst Karten (36) unsortiert oder nach Karteninformationen vorsortiert von der Förderstrecke (9) in den Speicher (2) überführt und anschließend entsprechend in einem Datenspeicher vorgehaltener Versandinformationen sortiert aus dem Speicher (2) in die Förderstrecke (9) überführt werden, **dadurch gekennzeichnet, dass** der Speicher (2) der Hauptspeicher (3) ist und die Sortierung bei der Überführung von Karten (36) aus dem Speicher (2) in die Förderstrecke (9) unter Zuhilfenahme des Zwischenspeichers (4) erfolgt.

12. Verfahren zum Sortieren von eine Förderstrecke (9) durchlaufenden Karten (36) unter Verwendung eines Kartenmassenspeichers (1, 10, 11) nach einem der Ansprüche 1 bis 5, **dadurch gekennzeichnet, dass** die Karten (36) zunächst von der Förderstrecke (9) über den Zwischenspeicher (4) in den Hauptspeicher (3) überführt und anschließend aus dem Hauptspeicher (3) über den Zwischenspeicher (4) wieder in die Förderstrecke (9) überführt werden.

13. Sortierverfahren nach Anspruch 12, **dadurch gekennzeichnet, dass** die Karten (36) aus dem Hauptspeicher (3) über den Zwischenspeicher (4) wieder in den Hauptspeicher (3) umsortiert werden, dass die Karten (36) in den Hauptspeicher (3) vorsortiert überführt werden, wenn sie von der Förderstrecke (9) über den Zwischenspeicher (4) in den Hauptspeicher (3) überführt werden, und/oder dass die Karten (36) aus dem Hauptspeicher (3) sortiert in den Zwischenspeicher (4) überführt werden, bevor sie in die Förderstrecke (9) überführt werden.

14. Sortierverfahren nach einem der Ansprüche 11 bis 13, **dadurch gekennzeichnet, dass** hintereinander in der Förderstrecke (9) einzusortierende Karten (36) in verschiedenen Haupt- und/oder Zwischenspeicher (3, 4) oder dicht nebeneinander in einen Hauptspeicher (3) überführt werden.

15. Sortierverfahren nach einem der Ansprüche 11 bis 14, **dadurch gekennzeichnet, dass** Karten (36) unter gezieltem Belassen von Speicherleerplätzen (25), die dann, falls erforderlich, nachfolgend aufgefüllt werden, in den Speicher (2) überführt und anschließend gezielt und einzeln wieder aus dem Speicher (2) ausgeführt werden.

16. Sortierverfahren nach einem der Ansprüche 11 bis 15, **dadurch gekennzeichnet, dass** Karten (36) unter gezieltem Belassen von Speicherleerplätzen (25), die dann, falls erforderlich, nachfolgend aufgefüllt werden, in den Speicher (2) überführt und anschließend wieder aus dem Speicher (2) in die Förderstrecke (9) überführt werden, dass Karten (36) über die Förderstrecke (9) an dem Speicher (2) vorbei gefördert werden, falls diese bereits zutreffend sortiert sind, und/oder dass über die Förderstrecke (9) Förderleerplätze (38) zu dem Speicher (2) geführt und, falls erforderlich, Karten (36) aus dem Speicher (2) in die Förderleerplätze (38) überführt werden.

## Claims

1. A card mass storage device (1, 10, 11) having a storage device (2) and a card transfer (7, 8) for introducing cards (36) into the card mass storage device (1) and for removing cards (36) from the card mass storage device (1), **characterized in that** the storage device (2) is a main storage device (3) with a number of card spaces (20) and an interim storage device (4) is disposed between the main storage device (3) and the card transfer (7), which interim storage device has at least two card spaces (20) and no more card spaces (20) than the main storage device (3), wherein the main storage device (3) is a main storage device ring (5) and/or has a drive with a reversible direction of rotation.

2. The card mass storage device (1, 10, 11) according to claim 1, **characterized in that** the interim storage device (4) is an interim storage device ring (6).

3. The card mass storage device (1, 10, 11) having a storage device ring (5, 6) as the storage device (2) and a card transfer device (7, 8) for introducing cards (36) into the card mass storage device (1, 10, 11) and for removing cards (36) from the card mass storage device (1, 10, 11), **characterized in that** the storage device ring (5, 6) is a main storage device ring (5) as the main storage device (3) and an interim storage device ring (6) is disposed as an interim storage device (4) between the main storage device ring (5) and the card transfer (7).

4. The card mass storage device (1, 10, 11) according to one of claims 1 to 3, **characterized by** at least one further main storage device (3) and a direct or indirect card transfer (7, 8), preferably with separate transfer spaces, both between the interim storage device (4) and each of the two main storage devices (3) and/or between the two main storage devices (3) relative to one another, wherein for each main storage device (3), in particular, an interim storage device (4) can be provided and preferably a direct or indirect card transfer (7, 8), preferably with separate transfer spaces, between the interim storage devices.

5. The card mass storage device (1, 10, 11) according to one of claims 1 to 4 having card holders (15) disposed on a circulating card holder support (18) that is movable in itself, wherein at least two card holders (15) are disposed rigidly relative to one another on a first holding body (16) and at least two further card holders (15) are disposed rigidly relative to one another on a second holding body (16) and wherein the two holding bodies (16) are disposed movably relative to one another on the card holder support (18), and having a card storage device with multiple addressable card holder devices (15) as an interim storage device (4), wherein the card holders (15) of the interim storage device (4) are disposed rigidly relative to one another so as to rotate about an axis of rotation (31) in circular form, and wherein the card holders (15) disposed on the circulating card holder support (18) that is movable in itself form the main storage device (3).

6. The card mass storage device (1, 10, 11) according to claim 5, **characterized in that** each card holder (15) comprises a card guide (21) and for at least one card holder (15) of a first holding element (16), a part of the card guide (21) is provided on a second, adjacent holding element.

7. The card mass storage device (1, 10, 11) according to claim 5 or 6, **characterized in that** a card transfer (7) is disposed in a linear region (19) of the card holder support (18), in which region the movable card holder support (18) is guided in a straight line.

8. The card mass storage device (1, 10, 11) according to one of claims 1 to 7 having a conveying section (9), **characterized in that** a card transfer (7) is provided between the at least one card mass storage device (2) and the conveying section (9), which card transfer (7) comprises a transfer space (26) on the storage device side and a transfer space (24) which deviates therefrom on the conveyor section side.

9. The card mass storage device (1, 10, 11) according to claim 5, **characterized in that** the card holders (15) of the interim storage device (4) comprise recesses (33) in a cylindrical base body (34).

10. The card mass storage device (1, 10, 11) according to one of claims 5 and 9, **characterized in that** at least one of the card holders (15) is configured to be passive.

11. A method for sorting cards (36) that pass through a conveyor section (9) using a storage device (2) comprising multiple card spaces (20) and using a mass card storage device (1, 10, 11) according to one of claims 1 to 5, wherein cards (36) are initially transferred from the conveyor section (9) into the storage device (2) in an unsorted manner or pre-sorted according to card information and then transferred in a sorted manner from the storage device (2) into the conveyor section (9) according to despatch information held in a data storage device, **characterized in that** the storage device (2) is the main storage device (3) and sorting takes place during the transfer of cards (36) from the storage device (2) into the conveyor section (9) with the help of the interim storage device (4).

12. The method for sorting cards (36) passing along a conveyor section (9) using a card mass storage device (1, 10, 11) according to one of claims 1 to 5, **characterized in that** the cards (36) are initially transferred from the conveyor section (9) into the main storage device (3) by way of the interim storage device (4) and then transferred from the main storage device (3) back into the conveyor section (9) by way of the interim storage device (4).

13. The sorting method according to claim 12, **characterized in that** the cards (36) are resorted from the main storage device (3) back into the main storage device (3) by way of the first interim storage device (4), that the cards (36) are transferred to the main storage device (3) in a pre-sorted manner when they are transferred from the conveyor section (9) into the main storage device (3) by way of the interim storage device (4) and/or that the cards (36) are transferred from the main storage device (3) into the interim storage device (4) in a sorted manner before they are transferred to the conveyor section (9).

14. The sorting method according to one of claims 11 to 13, **characterized in that** cards (36) to be sorted one after the other in the conveyor section (9) are transferred into different main and/or interim storage devices (3, 4) or tightly next to one another into a main storage device (3).

15. The sorting method according to one of claims 11 to 14, **characterized in that** cards (36) are transferred into the storage device (2), leaving storage device card spaces (25) empty in a selective manner, said spaces then being filled subsequently where necessary, and said cards are then individually removed again from the storage device (2) in a selective manner.

16. The sorting method according to one of claims 11 to 15, **characterized in that** cards (36) are transferred into the storage device (2), leaving storage device card spaces (25) empty in a selective manner, said spaces then being filled subsequently where necessary, and said cards are then transferred again from the storage device (2) into the conveyor section (9), that cards (36) are conveyed past the storage device (2) by way of the conveyor section (9), if said cards are already appropriately sorted, and/or that conveyor empty spaces (38) are guided via the conveyor section (9) to the storage device (2) and, where necessary, cards (36) are transferred from the storage device (2) into the conveyor empty spaces (38).

## Revendications

1. Accumulateur de masse de cartes (1, 10, 11) pourvu d'un accumulateur (2) et d'un transfert de cartes (7, 8) destiné à saisir des cartes (36) dans l'accumulateur de masse de cartes (1) et à sortir des cartes (36) de l'accumulateur de masse de cartes (1), **caractérisé en ce que** l'accumulateur (2) est un accumulateur principal (3) avec un nombre d'emplacements de cartes (20) et **en ce qu'**entre l'accumulateur principal (3) et le transfert de cartes (7) est placé un accumulateur tampon (4) qui comporte au moins deux emplacements de cartes (20) et pas plus d'emplacements de cartes (20) que l'accumulateur principal (3), l'accumulateur principal (3) étant un anneau de stockage principal (5) et/ou comportant un entraînement avec une inversion du sens de rotation .

2. Accumulateur de masse de cartes (1, 10, 11) selon la revendication 1, **caractérisé en ce que** l'accumulateur tampon (4) est un anneau de stockage tampon (6).

3. Accumulateur de masse de cartes (1, 10, 11) pourvu d'un anneau de stockage (5, 6) en tant qu'accumulateur (2) et d'un transfert de cartes (7, 8) destiné à saisir des cartes (36) dans l'accumulateur de masse de cartes (1, 10, 11) et à sortir des cartes (36) de l'accumulateur de masse de cartes (1, 10, 11), **caractérisé en ce que** l'anneau de stockage (5, 6) est un anneau de stockage principal (5) en tant qu'accumulateur principal (3) et **en ce qu'**un anneau de stockage tampon (6) en tant qu'accumulateur tampon (4) est placé entre l'anneau de stockage principal (5) et le transfert de cartes (7).

4. Accumulateur de masse de cartes (1, 10, 11) selon l'une quelconque des revendications 1 à 3, **caractérisé par** au moins un accumulateur principal (3) additionnel, ainsi que par un transfert de cartes (7, 8) direct ou indirect, doté de préférence d'emplacements de transfert séparés, aussi bien entre l'accumulateur tampon (4) et respectivement les deux accumulateurs principaux (3) et/ou entre les deux accumulateurs principaux (3) mutuellement, notamment un accumulateur tampon (4) pouvant être prévu pour chaque accumulateur principal (3), ainsi que de préférence un transfert de cartes (7, 8) direct ou indirect, doté de préférence d'emplacements de transfert séparés entre les accumulateurs tampons.

5. Accumulateur de masse de cartes (1, 10, 11) selon l'une quelconque des revendications 1 à 4, pourvu de porte-cartes (15) placés sur un support de porte-cartes (18) en révolution, mobile sur soi, au moins deux porte-cartes (15) étant placés en étant rigides l'un par rapport à l'autre sur un premier organe de retenue (16) et au moins deux porte-cartes (15) supplémentaires étant placés en étant rigides l'un par rapport à l'autre sur un deuxième organe de retenue (16) et les deux organes de retenue (16) étant placés en étant mobiles l'un par rapport à l'autre sur le support de porte-cartes (18), et pourvu d'un accumulateur de cartes disposant de plusieurs porte-cartes (15) adressables en tant qu'accumulateur tampon (4), les porte-cartes (15) de l'accumulateur tampon (4) étant placés de manière rigide l'un par rapport à l'autre et en étant rotatifs sous forme circulaire autour d'un axe de rotation (31) et les porte-cartes (15) placés sur le support de porte-cartes (18) en révolution, mobiles sur eux formant l'accumulateur principal (3).

6. Accumulateur de masse de cartes (1, 10, 11) selon la revendication 5, **caractérisé en ce que** chaque porte-carte (15) comporte un guide carte (21) et **en ce qu'**au moins pour un porte-carte (15) d'un premier organe de retenue (16), une partie du guide carte (21) est prévue sur un deuxième organe de retenue voisin.

7. Accumulateur de masse de cartes (1, 10, 11) selon la revendication 5 ou 6, **caractérisé en ce qu'**un transfert de cartes (7) est placé dans une zone linéaire (19) du support de porte-cartes (18) dans lequel le support de porte-cartes (18) mobile est guidé en ligne droite.

8. Accumulateur de masse de cartes (1, 10, 11) selon l'une quelconque des revendications 1 à 7, pourvu d'un trajet de convoyage (9), **caractérisé en ce qu'**entre l'au moins un accumulateur de masse de cartes (2) et le trajet de convoyage (9) est prévu un transfert de cartes (7) qui comprend un emplacement de transfert (26) côté accumulateur et un emplacement de transfert (24) côté trajet de convoyage qui est divergent de celui-ci.

9. Accumulateur de masse de cartes (1, 10, 11) selon la revendication 5, **caractérisé en ce que** les porte-cartes (15) de l'accumulateur tampon (4) comprennent des évidements (33) dans un corps de base cylindrique (34) .

10. Accumulateur de masse de cartes (1, 10, 11) selon l'une quelconque des revendications 5 et 9, **caractérisé en ce qu'**au moins l'un des porte-cartes (15) est conçu en version passive.

11. Procédé de tri de cartes (36) traversant un trajet de convoyage (9), en utilisant un accumulateur (2) comportant plusieurs emplacements de cartes (20) et en utilisant un accumulateur de masse de cartes (1, 10, 11) selon l'une quelconque des revendications 1 à 5, dans un premier temps, des cartes (36) non triées ou préalablement triées par information figurant sur la carte étant transférées du trajet de convoyage (9) dans l'accumulateur (2) et par ailleurs dans la suite, triées conformément à des informations d'envoi sauvegardées dans une mémoire de données, étant transférées de l'accumulateur (2) dans le trajet de convoyage (9), **caractérisé en ce que** l'accumulateur (2) est l'accumulateur principal (3) et **en ce que** le tri s'effectue lors du transfert de cartes (36) de l'accumulateur (2) dans le trajet de convoyage (9), avec l'aide de l'accumulateur tampon (4).

12. Procédé de tri de cartes (36) traversant un trajet de convoyage (9), en utilisant un accumulateur de masse de cartes (1, 10, 11) selon l'une quelconque des revendications 1 à 5, **caractérisé en ce que** dans un premier temps, les cartes (36) sont transférées du trajet de convoyage (9) via l'accumulateur tampon (4) dans l'accumulateur principal (3) et dans la suite, sont retransférées de l'accumulateur principal (3) via l'accumulateur tampon (4) dans le trajet de convoyage (9) .

13. Procédé de tri selon la revendication 12, **caractérisé en ce que** les cartes (36) sortant de l'accumulateur principal (3) sont retriées via l'accumulateur tampon (4) en retour dans l'accumulateur principal (3), **en ce que** les cartes (36) sont transférées à l'état préalablement trié dans l'accumulateur principal (3) lorsqu'elles sont transférées du trajet de convoyage (9) via l'accumulateur tampon (4) dans l'accumulateur principal (3), et/ou **en ce que** les cartes (36) sont transférées en étant triées de l'accumulateur principal (3) dans l'accumulateur tampon (4), avant d'être transférées dans le trajet de convoyage (9).

14. Procédé de tri selon l'une quelconque des revendications 11 à 13, **caractérisé en ce que** les unes derrière les autres dans le trajet de convoyage (9), des cartes (36) qui doivent être rangées en étant triées sont transférées dans différents accumulateurs principaux et/ou accumulateurs tampons (3, 4) ou sont transférées en juxtaposition intime dans un accumulateur principal (3).

15. Procédé de tri selon l'une quelconque des revendications 11 à 14, **caractérisé en ce que** des cartes (36) sont transférées dans l'accumulateur (2) en laissant libre de manière ciblée des places vides dans l'accumulateur (25), qui sont ensuite remplies si nécessaire par la suite et ensuite ré-évacuées une à une et de manière ciblée hors de l'accumulateur (2).

16. Procédé de tri selon l'une quelconque des revendications 11 à 15, **caractérisé en ce que** des cartes (36) sont transférées dans un accumulateur (2) en laissant libre de manière ciblée des places vides dans l'accumulateur (25), qui sont ensuite remplies si nécessaire par la suite et sont ensuite retransférées hors de l'accumulateur (2) dans le trajet de convoyage (9), **en ce que** des cartes (36) sont convoyées via le trajet de convoyage (9) à l'avant de l'accumulateur (2), si elles sont déjà triées en conséquence, et/ou **en ce que** via le trajet de convoyage (9), des places de convoyage vides (38) sont menées vers l'accumulateur (2) et, si nécessaire, des cartes (36) sont transférées de l'accumulateur (2) dans les places de convoyage vides (38).
